# EUROPEAN PATENT APPLICATION

(11) **EP 3 697 067 A1**
(43) Date of publication of application: **19.08.2020**
(21) Application number: 18897050.3
(22) Date of filing: 20.12.2018
(51) Int. Cl.: H04M 1/725

(54) **ELECTRONIC DEVICE AND CONTROL METHOD THEREOF**

(30) Priority: 29.12.2017 KR 20170184182
(71) Applicant: Samsung Electronics Co., Ltd., Gyeonggi-do 16677 (KR); Ronan et Erwan Bouroullec, 75010 Paris (FR); One More Studio, 75010 Paris (FR)
(72) Inventor: WHANG, Sejung, Suwon-si Gyeonggi-do 16677 (KR); BOUROULLEC, Ronan, 75010 Paris (FR); BOUROULLEC, Erwan, 75010 Paris (FR); CHUNG, Kangil, Suwon-si Gyeonggi-do 16677 (KR); SHIN, Suwon, Suwon-si Gyeonggi-do 16677 (KR); HUGO, Gael, 75010 Paris (FR)
(74) Representative: Appleyard Lees IP LLP
(86) International application number: PCT/KR2018/016320
(87) International publication number: WO 2019/132409

(57) **Abstract**

Disclosed are an electronic device and a control method thereof. The electronic device according to the present invention includes a display unit, a memory including at least one instruction, and a processor for executing at least one instruction to control the display unit to display a pattern image and a widget UI set by a user while the electronic device is operating in a standby mode, wherein the processor changes the pattern image on the basis of information contained in the widget UI or the type of the widget UI. Accordingly, the electronic device can provide a more diverse experience.

## Description

### [Technical Field]

The disclosure relates generally to an electronic apparatus and a control method thereof. More particularly, the disclosure relates to an electronic apparatus for providing various UI during standby mode and a control method thereof.

### [Background Art]

Functions for providing various user experiences by using a display device such as a smartphone or a smart TV have been developed.

However, the function for providing a user experience takes into account that the user can easily access and use functions provided by the display device.

For example, a recent display apparatus provides a function of providing various widget UIs on a black screen when the display device operates in a standby mode and the screen becomes a black screen.

As described above, the function for providing a user experience is to enable the user to more easily access and use functions provided by a display device.

Therefore, development of functions to provide various user experiences should be found.

### [Detailed Description of the Invention]

### [Technical Problem]

The disclosure has been devised according to the description above, and an object of the disclosure is to provide a more diverse user experience in an electronic apparatus.

### [Technical Solution]

As an aspect of the embodiments relates to an electronic apparatus including a display unit, a memory including at least one instruction, and a processor configured to control the display unit to display a pattern image and a widget UI set by a user while the electronic apparatus is operating in a standby mode by executing at least one instruction, wherein the processor changes the pattern image based on information included in the widget UI or the type of the widget UI.

The processor may be configured to provide a graphic effect with respect to the pattern image based on the information included in the widget UI or the type of the widget UI.

The pattern image may include a plurality of pattern elements, the graphic effect may be configured to provide an effect that the plurality of pattern elements move, and the processor may be configured to provide the graphic effect with a movement of the pattern element corresponding to the information included in the widget UI or the type of the widget UI.

The widget UI may be configured to be displayed on one area of the pattern image, and the processor may be configured to provide the graphic effect only to an area other than one area on which the widget UI is displayed.

The widget UI may be a widget UI of an application related to playing music content, and the processor may be configured to provide a graphic effect to the pattern image based on playing time of the content while the music content is being played through the application.

The widget UI may be a clock widget UI, and the processor may be configured to determine and provide an area providing the graphic effect among the pattern images based on time information of the clock widget UI.

The widget UI may include a video content, and the processor may be configured to analyze an image of the video content and provide a graphic effect to the pattern image.

The processor may be configured to provide a first graphic effect corresponding to the first widget UI to the pattern image while displaying the first widget UI, based on a user command for changing to a second widget UI being input, change the first widget UI to the second widget UI and display it, and provide a second graphic effect corresponding to the second widget UI to the pattern image.

The processor may be configured to provide a change graphic effect to the pattern image while the first widget UI is changed to the second widget UI.

The processor may be configured to control the display unit to display a pallet UI for generating the patter image according to the user command, and the pallet UI may be configured to include a plurality of pattern information and a plurality of color information.

As an aspect of the embodiments relates to a control method of an electronic apparatus including generating a pattern image and a widget UI set by a user while the electronic apparatus is operating in a standby mode, and displaying the pattern image based on the widget UI, the displaying includes changing the pattern image based on information included in the widget UI and the type of the widget UI and displaying it.

The changing may be configured to provide a graphic effect with respect to the pattern image based on the information included in the widget UI or the type of the widget UI.

The pattern image may include a plurality of pattern elements, and the graphic effect may be configured to provide an effect that the plurality of pattern elements move, and the displaying may be configured to provide the graphic effect with a movement of the pattern element corresponding to the information included in the widget UI or the type of the widget UI.

The widget UI may be displayed on one area of the pattern image, and the displaying may be configured to provide the graphic effect only to an area other than one area where the widget UI is displayed.

The widget UI may be a widget UI of an application related to playing music content, and the displaying may be configured to provide the graphic effect on the pattern image based on playing time of the content while the music content is being played through the application.

### [Effect of the Invention]

According to various embodiments of the disclosure as described above, an electronic apparatus can provide a more diverse user experience.

### [Brief Description of Drawings]

FIG. 1 is a block diagram schematically illustrating an electronic apparatus according to an embodiment of the disclosure;
FIG. 2 is a detailed block diagram illustrating an electronic apparatus according to an embodiment of the disclosure;
FIG. 3 is an exemplary diagram providing a pattern image in an electronic apparatus according to an embodiment of the disclosure
FIG. 4 is an exemplary diagram providing a graphic effect with respect to a pattern image based on the type of a widget UI in an electronic apparatus according to an embodiment of the disclosure;
FIG. 5 is first exemplary diagram providing a graphic effect with respect to a pattern image based on information contained in a widget UI in an electronic apparatus according to an embodiment of the disclosure;
FIG. 6 is a second exemplary diagram providing a graphic effect with respect to a pattern image based on information contained in a widget UI in an electronic apparatus according to another embodiment of the disclosure;
FIG. 7 is a third exemplary diagram providing a graphic effect with respect to a pattern image based on information included in a widget UI in an electronic apparatus according to another embodiment of the disclosure;
FIG. 8 is a fourth exemplary diagram providing a graphic effect with respect to a pattern image based on information contained in a widget UI in an electronic apparatus according to another embodiment of the disclosure;
FIG. 9 is an exemplary diagram providing a pattern image based on page switching in an electronic apparatus according to an embodiment of the disclosure;
FIG. 10 is an exemplary diagram providing a pattern image based on content in an electronic apparatus according to an embodiment of the disclosure; and
FIG. 11 is a flowchart of a control method of an electronic apparatus according to an embodiment of the disclosure.

### [Best Mode for Implementing the Disclosure]

Exemplary embodiments are described in greater detail below with reference to the accompanying drawings.

The terms used in the example embodiments of the present disclosure are general terms which are widely used now and selected considering the functions of the present disclosure. However, the terms may vary depending on the intention of a person skilled in the art, a precedent, or the advent of new technology. In addition, in a special case, terms selected by the applicant may be used. In this case, the meaning of the terms will be explained in detail in the corresponding detailed descriptions. Accordingly, defining the terms used herein will be based on the meanings of the terms and overall contents of exemplary embodiments, rather than simple names of the terms.

As exemplary embodiments may have a variety of modifications and several examples, certain exemplary embodiments will be exemplified in the drawings and described in detail in the description thereof. However, this is not intended to limit the scope to an exemplary embodiment, and therefore, it should be understood that all the modifications, equivalents or substitutes included under the invented spirit and technical scope are encompassed. While describing exemplary embodiments, if it is determined that the specific description regarding a known technology obscures the gist of the disclosure, the specific description is omitted.

The terms such as "first," "second," and so on may be used to describe a variety of elements, but the elements should not be limited by these terms. The terms used herein are solely intended to explain specific example embodiments, and not to limit the scope of the present disclosure.

Singular forms are intended to include plural forms unless the context clearly indicates otherwise. The terms "include", "comprise", "is configured to," etc., of the description are used to indicate that there are features, numbers, steps, operations, elements, parts or combination thereof, and they should not exclude the possibilities of combination or addition of one or more features, numbers, steps, operations, elements, parts or a combination thereof.

According to exemplary embodiments, a "module" or "unit" performs at least one function or operation, and may be implemented as hardware or software, or a combination of hardware and software. In addition, a plurality of 'modules' or a plurality of 'units' may be integrated into at least one module and may be at least one processor except for 'modules' or 'units' that should be realized in a specific hardware.

Throughout the exemplary embodiments, when a certain portion is stated as being "connected" with another, this means that the portion is not only "directly connected", but also "electrically connected" while being intervened by another element in the middle. In addition, it also includes not only physical connection but also wireless connection. In addition, it includes the case of wireless connection as well as physical connection. Further, when a certain portion is stated as "comprising" a certain element, unless otherwise stated, this means that the certain portion may include another element, rather than foreclosing the same.

Hereinafter, certain exemplary embodiments will now be described in greater detail with reference to the accompanying drawings to enable those skilled in the art to work the same with ease. However, exemplary embodiments may be realized in a variety of different configurations, and not limited to descriptions provided herein. Further, those that are irrelevant with the description are omitted so as to describe exemplary embodiments more clearly, and similar drawing reference numerals are used for the similar elements throughout the description.

Below, exemplary embodiments will be described in detail with reference to the accompanying drawings.

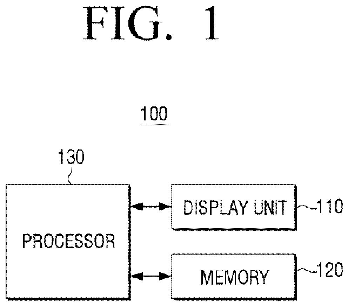

FIG. 1 is a block diagram schematically illustrating an electronic apparatus according to an embodiment of the disclosure.

As illustrated in FIG. 1, the electronic apparatus 100 may be a display device such as a smart TV or a large-screen TV, or a user terminal device such as a smartphone.

The electronic apparatus 100 includes a display unit 110, at least one memory 120 and a processor 130.

The display unit 110 may display content requested by a user. For example, when an operation mode of the electronic apparatus 100 is switched to a standby mode, the display unit 110 may display a pattern image and at least one widget UI set by the user on a black screen.

The at least one memory 120 includes at least one instruction for controlling the operation of the electronic apparatus 100. In addition, at least one memory 120 may store setting information, content, or the like with respect to the pattern image set by the user.

The processor 130 controls the overall operations of components constituting the electronic apparatus 100.

Particularly, the processor 130 may control the display unit 110 by executing at least one instruction included in the at least one memory 120 to display the pattern image and at least one widget UI set by the user while the electronic apparatus 100 is operating in a standby mode.

The standby mode may cut off power supply to a configuration other than a specific configuration among a plurality of configurations constituting the electronic apparatus 100 in order to minimize power consumption of the electronic apparatus 100, or may be a supply mode that provides a low power to at least one configuration.

In addition, the processor 130 may change a pattern image based on information contained in the at least one widget UI or the type of the at least one widget UI, and control the display unit 110 to display the changed pattern image.

Specifically, the processor 130 may change the pattern image set by the user by providing a graphic effect with the respect to the pattern image based on the information contained in the at least one widget UI or the type of the at least one widget UI.

The pattern image may be implemented in a pattern and color set by the user, so that the electronic apparatus 100 may be an image displayed on a black display screen while the electronica apparatus is operating in a standby mode.

The pattern image may include a plurality of pattern elements, and a graphic effect may provide an effect that a plurality of pattern images are moving.

Accordingly, the processor 130 may change the pattern image set by the user by providing a graphic effect through information contained in the at least one widget UI or the movement of a pattern element corresponding to the type of the at least one widget UI.

The pattern image may be set through a palette UI.

For example, the processor 130 may control the display unit 110 to display the palette UI for generating a pattern image according to a user command. Accordingly, the display unit 110 may display the palette UI including a plurality of pattern information and a plurality of color information.

When the palette UI is displayed, users may select a pattern and color they want, and the processor 130 may generate a pattern image based on the pattern and color selected by the user.

The processor 130 may update color information included in the palette UI. For example, when displaying a still image or video-related content requested by the user, the processor 130 may compare the color information of the displayed content with the color information included in the palette UI, and update a color which is not included in colors included in the palette UI among colors of the displayed content to the color information of the palette UI.

At least one widget UI may be displayed on one area of the pattern image. Accordingly, the processor 130 may provide a graphic effect only to the remaining areas except for one area of the pattern image in which at least one widget UI is displayed.

The widget UI displayed on one area of the pattern image may be a widget UI of an application related to playing music content. In this case, the processor 130 may provide a graphic effect for the pattern image based on a playing time of the music content of the corresponding music content while the music content is being played through the application.

The widget UI displayed on one area of the pattern image may be a clock widget UI. The processor 130 may determine an area to provide the graphic effect among the pattern images set by the user based on the time information of the clock widget UI, and provide a graphic effect on the determined area.

The widget UI displayed on one area of the pattern image may include image content. The processor 130 may analyze an image of the image content displayed on one area of the pattern image and provide a graphic effect to the pattern image set by the user.

While displaying a first widget UI among at least one widget UI, the processor 130 may provide a first graphic effect corresponding to the first widget UI. When a user command for changing to a second widget UI is input while the first graphic effect is provided on the pattern image on which the first widget UI is displayed, the processor 130 may change the first widget UI to the second widget UI and display it, and provide a second graphic effect corresponding to the second widget UI to the pattern image.

The processor 130 may provide a change graphic effect to the pattern image while changing from the first widget UI to the second widget UI according to the user command.

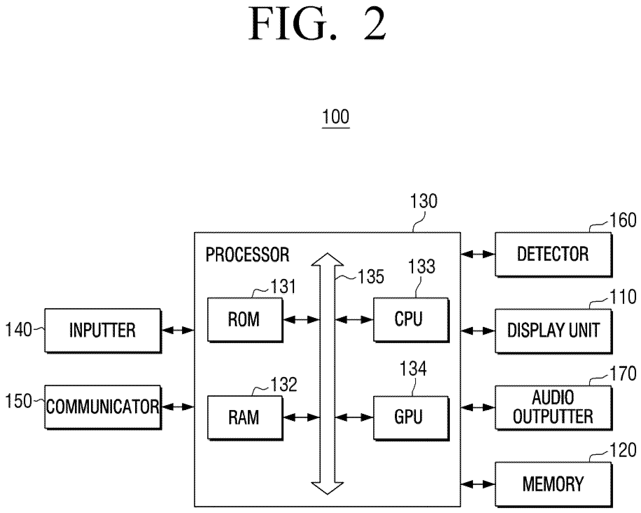

FIG. 2 is a detailed block diagram illustrating an electronic apparatus according to an embodiment of the disclosure.

In addition to the configuration described above, the electronic apparatus 100 according to the application may further include an inputter 140, a communicator comprising circuitry 150, a detector 160, and an audio out unit 170 as described in FIG. 2.

Prior to the description of the configuration of FIG. 2, the display unit 110 described above may be implemented by a liquid crystal display (LCD), an organic light emitting diode (OLED), or the like. In particular, when the inputter 140 to be described below includes a touch inputter (not illustrated) capable of a user touch input, the display unit 110 may be implemented in a touch screen form having a mutual layer structure with the touch inputter (not illustrated).

At least one memory 120 includes various commands for controlling the operation of the electronic apparats 100. In addition, at least one memory 120 may store execution programs, contents, and the like for executing various applications.

Commands for controlling the operation of the electronic apparatus 100 may be read from the memory 120 when the electronic apparatus 100 is turned on, and may be compiled to be a program that operates each component of the electronic apparatus 100. The memory 120 may be implemented as at least one of a memory card (e.g., an SD card and a memory stick) which can be mounted in or dismounted from a read only memory (ROM), a random access memory (RAM), or the electronic apparatus 100, a non-volatile memory, a volatile memory, a hard disk drive (TDD), and a solid state drive (SSD).

The processor 130 described above may be a processing device that controls the operation of the electronic apparats 100 in general or controls the overall operation of the electronic apparatus 100. The processor 130 may include a CPU 133, a ROM 131, a RAM 132, and a GPU 134, and the CPU 133, a ROM 131, a RAM 132, and a GPU 134 may be connected to each other through a bus 135.

The CPU 133 may access the memory 120 and perform booting by using OS stored in the memory 120. The CPU 133 may perform various operations using various programs, contents, data, etc. stored in the storage 120.

The GPU 134 may generate a display screen including various objects such as icons, images, texts, or the like. For example, the GPU 134 may calculate attribute values such as coordinate values, shapes, sizes, colors, etc. to be displayed according to a layout of a screen based on a received control command, and generate a display screen of various layouts including objects based on the calculated attribute values.

The ROM 131 may store a set of commands for system booting. When a turn-on command is input and thus the electric power is supplied, the CPU 133 may copy the stored O/S in the memory 120 to RAM 134 according to the commands stored in ROM 131, and boot the system by executing O/S. When the booting is completed, the CPU 133 may copy the various programs stored in the memory 120 to the RAM 132, and perform various operations by implementing the programs copied to the RAM 132.

The processor 130 may be implemented by a system-on-a chip (SOC) or a system on chip (Soc) by being combined with various components such as the foregoing configurations and configurations which will be described below.

The inputter 140 is an input means receiving various user commands and transferring the input user command to the processor 130 and may include a microphone, a manipulator, a touch inputter, and a user inputter.

The microphone may receive the voice command of the user and the manipulator may be implemented by a key pad including various function keys, a numeric key, a special key, a character key, or the like.

In addition, when the foregoing display unit 110 is implemented in the form of a touch screen, the touch inputter may be implemented as a touch pad that forms a mutual layer structure with the display unit 110. The touch inputter may receive selection commands for various application-related icons displayed through the display unit 110.

The user inputter 154 may receive an IR signal or an RF signal for controlling the operation of the electronic apparatus 100 from at least one peripheral device (not illustrated) like a remote control device.

For example, the communicator 150 may be implemented as a variety of communication modules such as a near-field wireless communication module (not illustrated) and a wireless communication module (not illustrated).

The near-field wireless communication module (not illustrated) is a module that performs a near-field wireless communication with at least one external terminal (not illustrated) located near, for example, it may include at least one of a Bluetooth module, a near-field communication (NFC) module, a Wi-Fi module, and a Zigbee module.

In addition, the wireless communication module refers to a module which is connected to an external network according to a wireless communication protocol such as IEEE and the like, and performs a communication. However, the disclosure is not limited thereto, and the wireless communication module (not illustrated) may further include a mobile communication module which is connected to a mobile communication network according to various mobile communication standards such as 3rd generation (3G), 3rd generation partnership project (3GPP), long term evolution (LTE), or the like to perform communications.

A connector (not illustrated) is configured to provide an interface with various source devices such as USB 2.0, USB 3.0, HDMI, IEEE 1394, or the like. The connector (not illustrated) may receive image-related data transmitted from an external terminal (not illustrated) or an external server (not illustrated) through a wired cable connected to the connector (not illustrated) according to a control command of the processor 130 or may transmit pre-stored image-related data to an external recording medium. Further, the connector (not illustrated) may receive electric power from a power source through the wired cable physically connected to the connector (not illustrated).

The detector 160 is a detecting sensor that detects ambient brightness and movement of the electronic apparatus 100. For example, when the electronic apparatus 100 is a user terminal device such as a smartphone, the detector 160 may include an illuminance sensor, a motion sensor, a magnetic sensor, a gravity sensor, a gyro sensor, or the like

The illuminance sensor may detect the brightness of a surrounding environment, and an accelerometer sensor that measures an acceleration or impact intensity of a moving electronic apparatus 100. In addition, the magnetic sensor is a sensor that uses a magnetic field of the earth and detects an azimuth, and the gravity sensor is a sensor that detects to which direction the gravity is applied and detects a direction by automatically rotating according to the direction the user is holding the electronic apparats 100. Lastly, the gyroscope sensor 114 is a sensor that adds a rotation function to the existing movement sensors to recognize a 6-axis direction to thereby help recognize a more elaborate and precise operation.

The audio outputter 170 may output audio data included in content stored in the memory 120 or content received from an external terminal (not illustrated) in the form of an audible sound through a speaker (not illustrated).

The respective configurations of the electronic apparatus 100 according to an embodiment has been described above. Hereinafter, an operation of providing a pattern image in the electronic apparatus according to the disclosure will be described in detail.

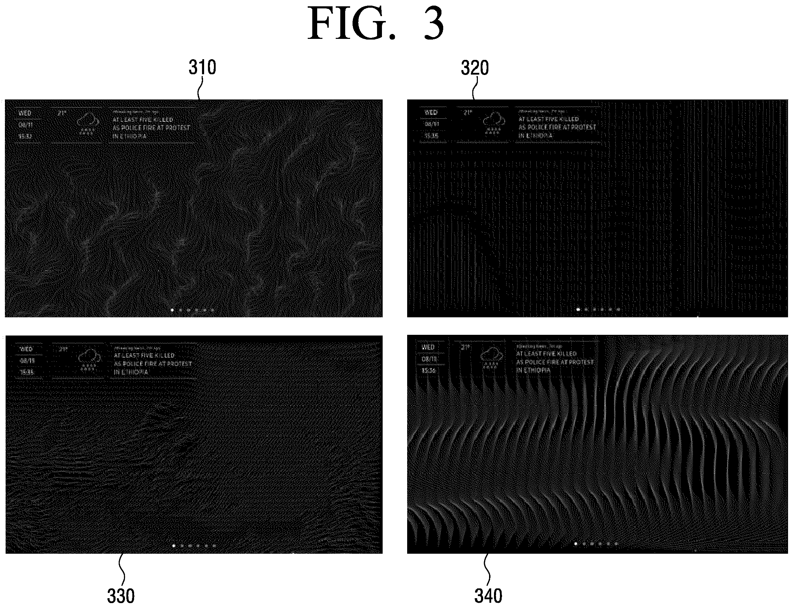

FIG. 3 is an exemplary diagram providing a pattern image in an electronic apparatus according to an embodiment of the disclosure.

As illustrated in FIG. 3, the electronic apparatus 100 may generate pattern images 310 to 340 based on patterns and colors set by the user, and display a widget UI set by the user in one area of the generated pattern image.

The electronic apparatus 100 may display a palette UI for generating a pattern image according to a user command. As described above, the palette UI may include a plurality of pattern information and a plurality of color information.

Accordingly, the electronic apparatus 100 may generate a pattern element based on a user command for pattern information and color information included in the displayed palette UI, and generate a pattern image including a plurality of generated pattern elements.

For example, the electronic apparatus 100 may generate a pattern image to which type and thickness of the pattern element, spacing between pattern elements, and graphic effect that the pattern element moves are applied based on the user command with respect to pattern information and color information included in the displayed palette UI

As illustrated, the electronic apparatus 100 may include a first pattern element and generate a first pattern image 310 to which a first color and a first graphic effect are applied, according to a user command.

Also, the electronic apparatus 100 may include a second pattern element and generate a second pattern image 320 to which a second color and the second graphic effect are applied, according to the user command.

Also, the electronic apparatus 100 may include a third pattern element and generate a third pattern image 330 to which a third color and a third graphic effect are applied, according to the user command.

Also, the electronic apparatus 100 may include a fourth pattern element and generate a fourth pattern image 340 to which a fourth color and a fourth graphic effect are applied, according to the user command.

In addition, when the first to fourth pattern images 310 to 340 set by the user are generated, the electronic apparatus 100 may display one of the first to fourth pattern images 310 to 340 while the electronic apparatus 100 is operating in a standby mode. The electronic apparatus 100 may display the widget UI set by the user on one area of the displayed pattern image among the first to fourth pattern images 310 to 340 and display the widget UI.

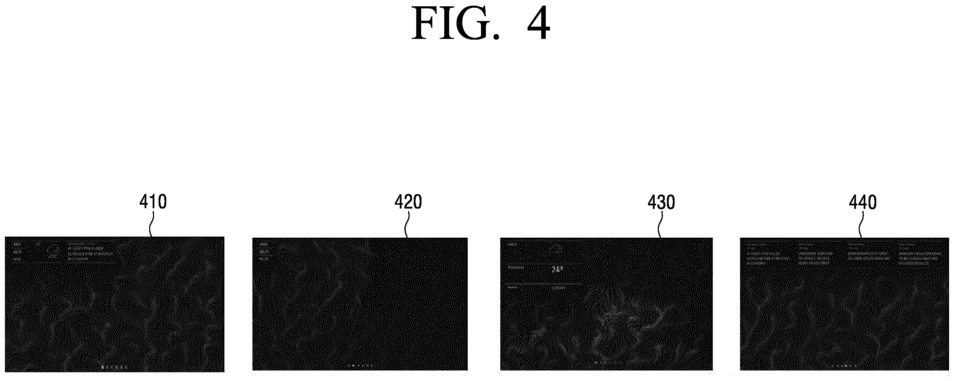

FIG. 4 is an exemplary diagram providing a graphic effect for a pattern image based on the type of a widget UI in an electronic apparatus according to an embodiment of the disclosure.

The electronic apparatus 100 may generate a pattern image set by the user through the foregoing embodiment.

Thereafter, the electronic apparatus 100 may provide a graphic effect of a pre-generated pattern image differently according to the type of the widget UI.

As illustrated in FIG. 4, when the widget UI is a main widget UI for entering a widget UI belonging to a lower depth, the electronic apparatus 100 may display the main widget UI on one area of a basic pattern image 410 set by the user, and display the basic pattern image 410 on which the main widget UI is displayed.

A graphic effect set by the user may be applied to a plurality of pattern elements included in the basic pattern image 410 displaying the main widget UI in one area.

In other words, the electronic apparatus 100 may display the main widget UI on one area of the basic pattern image 410 to which the graphic effect set by the user is applied to the plurality of pattern elements.

Meanwhile, when the first widget UI among the plurality of widget UIs belonging to the lower depth is a clock-related widget UI, the electronic apparatus 100 may change from the basic pattern image 410 to the first pattern image 420. Thereafter, the electronic apparatus 100 may display the clock-related widget UI on one area of the changed first pattern image 420, and display the first pattern image 420 in which the clock-related widget UI is displayed.

In other words, the electronic apparatus 100 may apply a first graphic effect corresponding to the clock-related widget UI to a plurality of pattern elements included in the basic pattern image 410, and display the first pattern image 420 in which the clock-related widget UI is displayed on one area.

Meanwhile, when the second widget UI among the plurality of widget UIs belonging to the lower depth is a weather-related widget UI, the electronic apparatus 100 may change from the basic pattern image 410 to the second pattern image 430.

However, the disclosure is not limited thereto, and may be changed from the currently set pattern image to the second pattern image 430. For example, when the currently set pattern image is the first pattern image 420, the electronic apparatus 100 may change from the first pattern image 420 to the second pattern image 430.

Thereafter, the electronic apparatus 100 may display the weather-related widget UI on one area of the changed second pattern image 420, and display the second pattern image 430 on which the weather-related widget UI is displayed.

In other words, the electronic apparatus 100 may apply the second graphic effect corresponding to the weather-related widget UI to the plurality of pattern elements included in the currently set pattern image, and display the second pattern image 430 on which the weather-related widget UI is displayed on one area.

Meanwhile, when a third widget UI among the plurality of widget UIs belonging to the lower depth is a news-related widget UI, the electronic apparatus 100 may change from the basic pattern image 410 to a third pattern image 440.

However, the disclosure is not limited thereto, and may change from a currently set pattern image to the third pattern image 440. For example, when the currently set pattern image is the first or second pattern images 420 and 430, the electronic apparatus 100 may change from the first or second pattern images 420 and 430 to the third pattern image 440.

Thereafter, the electronic apparatus 100 may display the news-related widget UI on one area of the changed third pattern image 440, and display the third pattern image 440 in which the news-related widget UI is displayed.

In other words, the electronic apparatus 100 may apply a third graphic effect corresponding to the news-related widget UI to the plurality of pattern elements included in the currently set pattern image, and display the third pattern image 440 on which the news-related widget UI is displayed on one area.

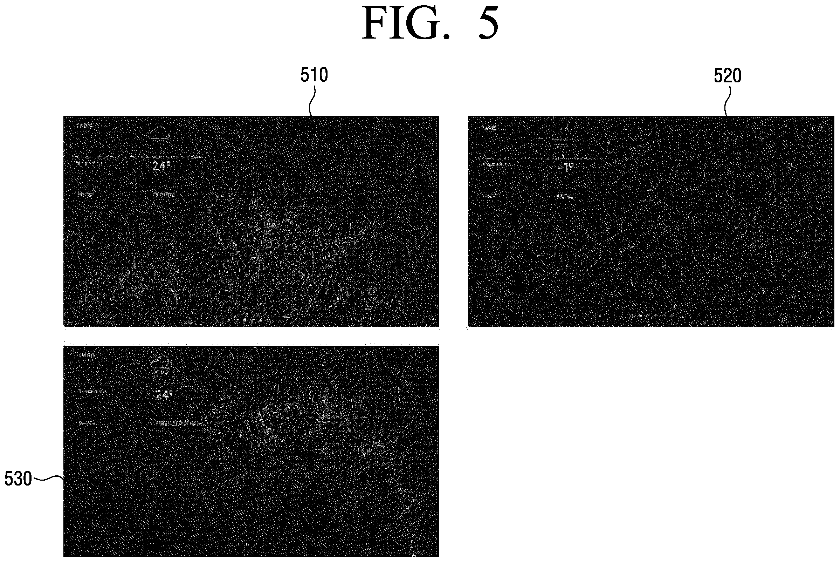

FIG. 5 is first exemplary diagram providing a graphic effect with respect to a pattern image based on information contained in a widget UI in an electronic apparatus according to an embodiment of the disclosure.

The electronic apparatus 100 may generate a pattern image set by the user through the foregoing embodiment.

Thereafter, the electronic apparatus 100 may provide the graphic effect of a pre-generated pattern image differently according to information included in the widget UI.

As illustrated in FIG. 5, when the widget UI is a weather-related widget UI, the electronic apparatus 100 may provide a graphic effect of the pre-generated pattern image differently according to information included in the weather-related widget UI.

For example, if it is identified as cloudy weather based on information included in the weather-related widget UI, the electronic apparatus 100 may apply a first graphic effect corresponding to the cloudy weather to a plurality of pattern elements included in the basic pattern image.

Thereafter, the electronic apparatus 100 may display a first pattern image 510 in which the first graphic effect is applied to the plurality of pattern elements, and the weather-related widget UI corresponding to cloudy weather is displayed on an area.

When it is identified as snowy weather based on information included in the weather-related widget UI, the electronic apparatus 100 may apply a second graphic effect corresponding to the snowy weather to the plurality of pattern elements included in the basic pattern image.

However, the disclosure is not limited thereto, and when the current pattern image is the first pattern image 510 to which the first graphic effect is applied to the plurality of pattern elements, the electronic apparatus 100 may apply the second graphic effect to the plurality of pattern elements included in the first pattern image 510.

Thereafter, the electronic apparatus 100 may display the second pattern image 520 to which the second graphic effect is applied to the plurality of pattern elements, and the weather-related widget UI corresponding to snowy weather is displayed on one area.

If it is identified as raining weather based on information included in the weather-related widget UI, the electronic apparatus 100 may apply a third graphic effect corresponding to the rainy weather to the plurality of pattern elements included in the basic pattern image.

However, the disclosure is not limited thereto, and when the current pattern image is the first pattern image and the second pattern image 510 or 520 to which the first or second graphic effect is applied to the plurality of pattern elements, the electronic apparatus 100 may apply the third graphic effect to the plurality of pattern elements included in the first or second pattern images 510 and 520.

Thereafter, the electronic apparatus 100 may display the third pattern image 530 to which the third graphic effect is applied to the plurality of pattern elements and the raining weather-related widget UI is displayed on one area.

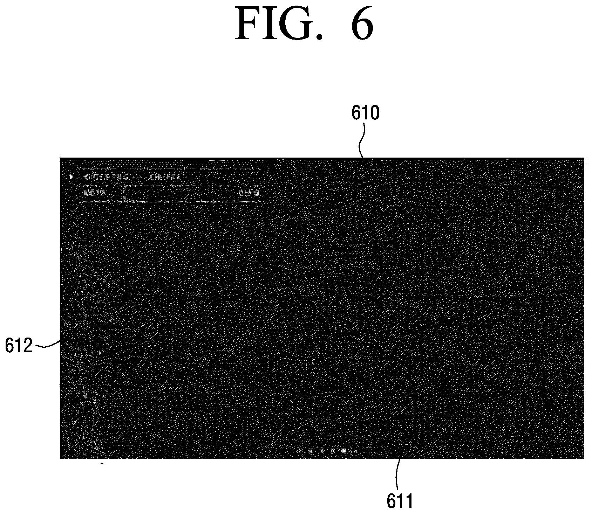

FIG. 6 is a second exemplary diagram providing a graphic effect with respect to a pattern image based on information contained in a widget UI in an electronic apparatus according to another embodiment of the disclosure.

The electronic apparatus 100 may generate a pattern image set by the user through the foregoing embodiment.

Thereafter, the electronic apparatus 100 may provide the graphic effect of a pre-generated pattern image differently according to information included in the widget UI.

As illustrated in FIG. 6, the widget UI may be a widget UI (hereinafter referred to as a music-related widget UI) of an application related to playing music content, and music content can be played through the music-related widget UI.

The electronic apparatus 100 may provide a graphic effect of the pre-generated pattern image differently according to the playing time of the music content.

For example, the electronic apparatus 100 may display a pattern image 610 in which a music-related widget UI is displayed on one area.

A first graphic effect 611 corresponding to a music-related widget UI may be applied to a plurality of pattern elements included in the pattern image 610.

While the first graphic effect 611 is applied to the plurality of pattern elements, and the pattern image 610 in which the music-related widget UI is displayed on one area is displayed, the electronic apparatus 100 may play the music content requested by the user through the music-related widget UI.

When the music content is played, the electronic apparatus 100 may display from a pattern element located in one direction among the plurality of pattern elements based on the playing time of the music content to the pattern image 610 to which the second graphic effect 612 different from the first graphic effect 611 is applied.

In other words, the electronic apparatus 100 may display the pattern image 610 that the second graphic effect 612 is applied to the pattern element included in the area corresponding to the playing time that the music content is played, and that the first graphic effect 611 is applied to the pattern element included in the remaining area.

Accordingly, when all of the music contents are played, the electronic apparatus 100 may display the pattern image 610 to which the second graphic effect 612 is applied to all of the plurality of pattern elements.

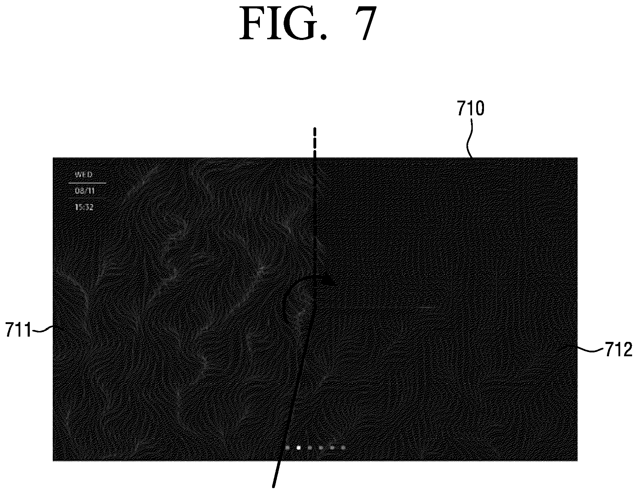

FIG. 7 is a third exemplary diagram providing a graphic effect with respect to a pattern image based on information included in a widget UI in an electronic apparatus according to another embodiment of the disclosure.

The electronic apparatus 100 may generate a pattern image set by the user through the foregoing embodiment.

Thereafter, the electronic apparatus 100 may provide the graphic effect of a pre-generated pattern image differently according to the information included in the widget UI.

As illustrated in FIG. 7, when the widget UI is a clock-related widget UI, the electronic apparatus 100 may provide graphic effects of the pre-generated pattern image differently according to time.

For example, the electronic apparatus 100 may display a pattern image 710 in which a clock-related widget UI is displayed on one area.

A first graphic effect 711 corresponding to the clock-related widget UI may be applied to the plurality of pattern elements included in the pattern image 710.

Thereafter, the electronic apparatus 100 may apply a second graphic effect 712 to the plurality of pattern elements to which the first graphic effect 711 is applied in a clockwise order according to time.

For example, if it is identified that the current time is 12:33, the electronic apparatus 100 may apply the second graphic effect 712 to a pattern element included up to a solid line corresponding to the solid line (12:33) based on a dotted line (at 12 o'clock) among the plurality of pattern elements to which the first graphic effect 711 is applied.

Thereafter, when it is identified that the current time is at 13:00, the electronic apparatus 100 may apply the second graphic effect 712 to all of the plurality of pattern elements included in the pattern image 710.

After the second graphic effect 712 is applied to all of the plurality of pattern elements included in the pattern image 710, if it is identified that the current time is 13:10, the electronic apparatus 100 may apply the first graphic effect 711 or another third graphic effect (not illustrated) to the pattern element corresponding to the pre-identified current time among the plurality of pattern elements based on a dotted line (at 13:00), and display the pattern image 710 in which the second graphic effect is applied to the remaining pattern elements.

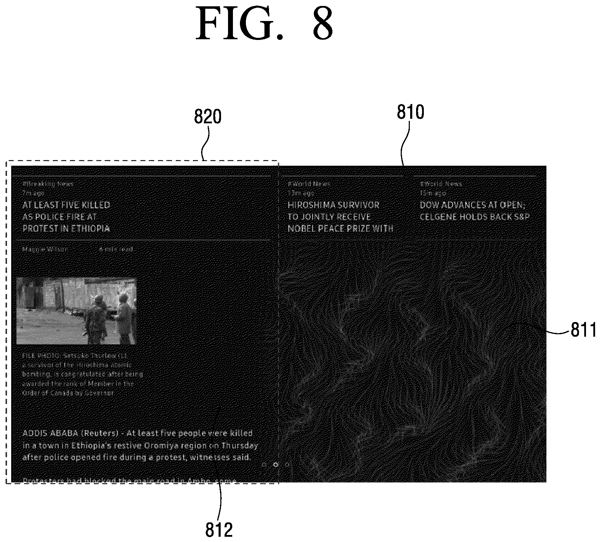

FIG. 8 is a fourth exemplary diagram providing a graphic effect with respect to a pattern image based on information contained in a widget UI in an electronic apparatus according to another embodiment of the disclosure.

The electronic apparatus 100 may generate a pattern image set by the user through the foregoing embodiment.

Thereafter, the electronic apparatus 100 may provide a graphic effect of the pre-generated pattern image differently according to information included in the widget UI.

As illustrated in FIG. 8, when the widget UI is a news-related widget UI, the electronic apparatus 100 may display a pattern image 810 that a graphic effect is applied to the remaining areas except for an area providing news information.

For example, the electronic apparatus 100 may display a pattern image 810 in which a news-related widget UI is displayed on one area and a pattern image 810 in which a graphic effect 811 is applied to a plurality of pattern elements.

Thereafter, the electronic apparatus 100 may display news information 820 on an area of the pattern image 810 based on a user command for the news-related widget UI.

When the news information 820 is displayed on one area, the electronic apparatus 100 may display the pattern image 810 in which the corresponding graphic effect 811 is applied only to the remaining pattern elements other than the pattern elements included in the area in which the news information 820 is displayed among the plurality of pattern elements included in the pattern image 810.

However, the disclosure is not limited thereto, and the electronic apparatus 100 may remove the pattern element included in the area where the news information 820 is displayed among the plurality of pattern elements included in the pattern image 810, and display the pattern image 810 in which the graphic effect 811 is applied to the pattern element included in the remaining area.

As described above, the electronic apparatus 100 may improve readability for the user's news information by providing a graphic effect only to the remaining area other than the area providing the news information or by removing the pattern element included in the area providing the news information.

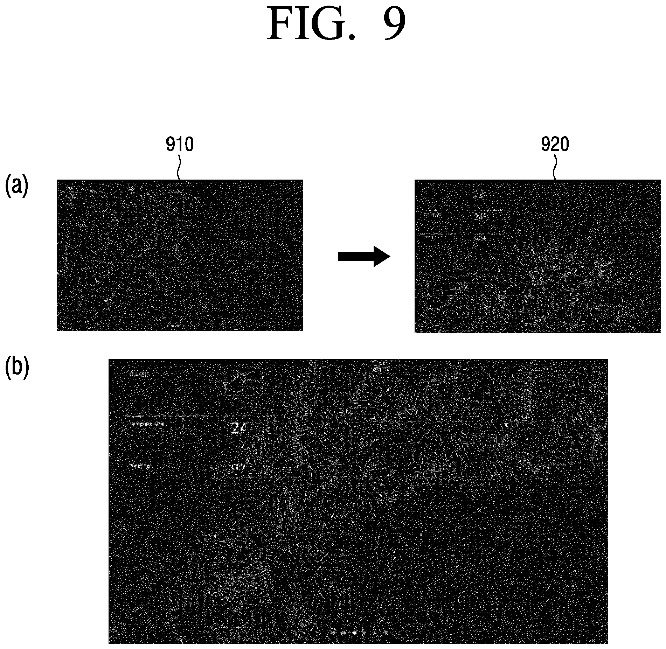

FIG. 9 is an exemplary diagram providing a pattern image based on page switching in an electronic apparatus according to an embodiment of the disclosure.

As illustrated in FIG. 9 (A), the electronic apparatus 100 may display a first pattern image 910 in which a clock-related widget UI is displayed on one area, and a first graphic effect corresponding to the clock-related widget UI is applied to a plurality of pattern elements.

While displaying the first pattern image 910, the electronic apparatus 100 may switch pages from the first pattern image 910 to a second pattern image 920 according to a user command.

The second pattern image 920 may be a pattern image that displays a weather-related widget UI on one area, and may be a patter image that a second graphic effect corresponding to the weather-related widget UI to the plurality of patter elements included in the second pattern image 920.

When a user command for switching the page is input from a first pattern image 910 to a second pattern image 920, the electronic apparatus 100 may sequentially apply the second graphic effect from a pattern element located in one direction among a plurality of pattern elements to which the first graphic effect is applied as illustrated in FIG. 9 (B).

As described above, the electronic apparatus 100 may provide a visual event effect according to the page switching by changing and applying a graphic effect related to the page to be sequentially switched from the pattern element in one direction according to the user command for page switching.

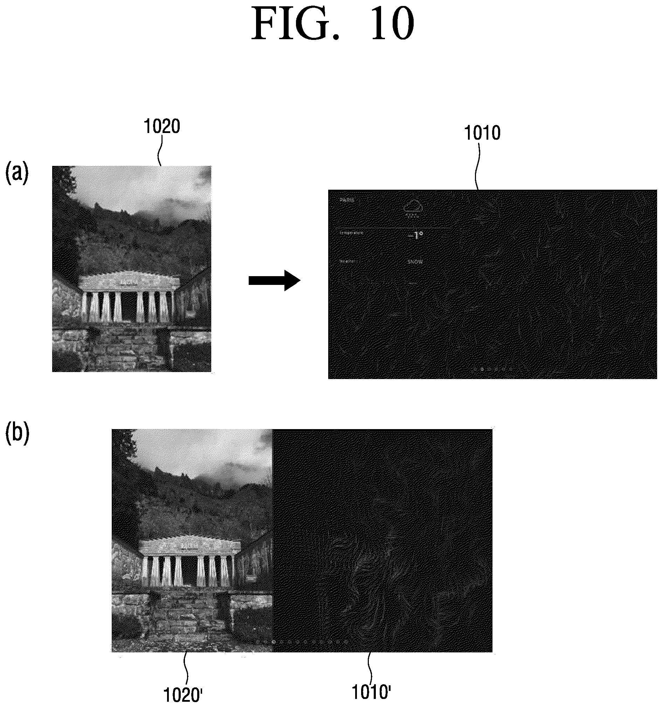

FIG. 10 is an exemplary diagram providing a pattern image based on content in an electronic apparatus according to an embodiment of the disclosure.

As illustrated in FIG. 10 (A), the electronic apparatus 100 may display a pattern image 1010 set by the user. The widget UI set by the user may be displayed on one area of the pattern image 1010.

The electronic apparatus 100 may display the content requested by the user on one area of the screen and display the pattern image 1010 on the remaining area according to the user command. The content may be a captured video image 1020.

When the video image 1020 and a pattern image 1010 are displayed on the screen, the electronic apparatus 100 may analyze the video image 1020 displayed on one area of the screen, and apply a graphic effect of the plurality of pattern elements included in the pattern image 1010 based on the analyzed result.

For example, the electronic apparatus 100 may analyze the video image 1020 to obtain pattern information constituting the corresponding video image 1020. According to an embodiment, the electronic apparatus 100 may extract feature values for an object included in the video image 1020 and obtain pattern information for the video image 1020 based on the extracted feature values.

The technique of acquiring the pattern information for the video image 1020 is a known technique, so that a detailed description will be omitted in the disclosure.

When the pattern information for the video image 1020 is obtained, the electronic apparatus 100 may reconstruct a plurality of pattern elements included in the pattern image 1010 based on the acquired pattern information. In other words, the electronic apparatus 100 may reconstruct a plurality of pattern elements included in the pattern image 1010 in a form similar to the video image 1020 based on the pattern information of the pre-obtained video image 1020.

Accordingly, the electronic apparatus 100 may display a video image 1020' requested by the user on one area of the screen, as illustrated in FIG. 10 (B), and display a pattern image 1010' in which the plurality of pattern elements are reconstructed based on the corresponding video image 1020' on the remaining area.

The operation of providing the pattern image and the widget UI set by the user during the standby mode in the electronic apparatus 100 according to the disclosure has been described in detail. Hereinafter, a method of providing a pattern image and a widget UI set by the user during the standby mode in the electronic apparatus 100 according to the disclosure will be described in detail.

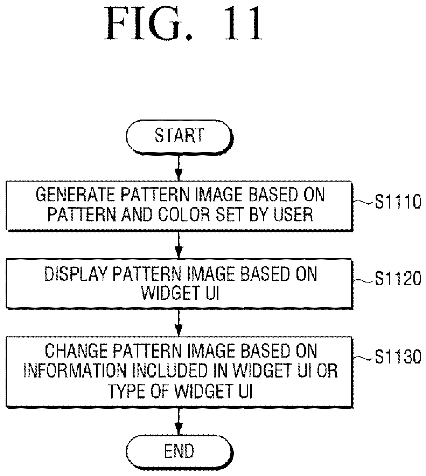

FIG. 11 is a flowchart of a control method of an electronic apparatus according to an embodiment of the disclosure.

As described in FIG. 11, the electronic apparatus 100 generates a pattern image and a widget UI set by the user while the electronic apparatus 100 is operating in a standby mode (S1110).

Then, the electronic apparatus 100 may display the pattern image based on the widget UI (S1120). The electronic apparatus 100 may change and display the pattern image based on the information included in the widget UI or the type of the widget UI.

For example, the electronic apparatus 100 may display a palette UI for generating a pattern image to be displayed while operating in the standby mode according to the user command.

The palette UI may include a plurality of pattern information and a plurality of color information. Accordingly, the user may select a desired pattern and color through the displayed palette UI, and the electronic apparatus 100 may generate a pattern image based on the pattern and color selected by the user.

Thereafter, while the electronic apparatus 100 is operating in the standby mode, the electronic apparatus 100 may display the widget UI selected by the user among the plurality of widget UIs and a pre-generated pattern image on a black screen which is a standby mode.

The electronic apparatus 100 may change the pattern image set by the user by providing a graphic effect with respect to the pattern image based on the information included in the widget UI or the type of the widget UI.

The pattern image includes a plurality of pattern elements, and the graphic effect is for providing an effect that the plurality of pattern images move.

Accordingly, the electronic apparatus 100 may change the pattern image set by the user by providing the graphic effect through information included in the at least one widget UI or movement of a pattern element corresponding to the type of the at least one widget UI.

The widget UI selected by the user among the plurality of widget UIs described above may be displayed on an area of a pre-generated pattern image. Accordingly, the electronic apparatus 100 may provide a graphic effect only to the remaining areas other than one area of the pattern image in which the widget UI selected by the user is displayed.

The widget UI displayed on one area of the pattern image may be a widget UI of an application related to playing music content. The processor 130 may provide a graphic effect for the pattern image based on the playing time of the corresponding music content while the music content is being played through an application.

The widget UI displayed on one area of the pattern image may be a clock widget UI. The electronic apparatus 100 may determine an area to provide a graphic effect among the pattern images set by the user based on time information of the clock widget UI, and provide a graphic effect on the determined area.

The widget UI displayed on one area of the pattern image may include a video content. The electronic apparatus 100 may analyze an image of the video content displayed on one area of the pattern image and provide a graphic effect to the pattern image set by the user.

The electronic apparatus 100 may provide the first graphic effect corresponding to the first widget UI to the pattern image while displaying the first widget UI among the at least one widget UI. When a user command for changing to the second widget UI is input while the first graphic effect is provided on the pattern image on which the first widget UI is displayed, the processor 130 may change the first widget UI to the second widget UI and display it, and provide a second graphic effect corresponding to the second widget UI to the pattern image.

The electronic apparatus 100 may provide a change graphic effect to the pattern image while changing from the first widget UI to the second widget UI according to the user command.

According to various exemplary embodiments as described above, applications installed in a user terminal device may share data by using a rapid and efficient method. The non-transitory readable medium may be installed and used in various devices.

The non-transitory computer readable recording medium refers to a medium that stores data and that can be read by devices. In detail, the aforementioned various applications or programs may be stored in the non-transitory computer readable medium, for example, a compact disc (CD), a digital versatile disc (DVD), a hard disc, a Blu-ray disc, a universal serial bus (USB), a memory card, a read only memory (ROM), and the like, and may be provided.

Also, the description of the embodiments is intended to be illustrative, and not to limit the scope of the claims, and it would be appreciated by those skilled in the art that changes may be made to the embodiments without departing from the principles and spirit of the disclosure, the scope of which is defined in the appended claims.

## Claims

1. An electronic apparatus comprising:
a display unit;
a memory comprising at least one instruction; and
a processor configured to control the display unit to display a pattern image and a widget UI set by a user while the electronic apparatus is operating in a standby mode by executing at least one instruction,
wherein the processor is further configured to change the pattern image based on information included in the widget UI or the type of the widget UI.

2. The electronic apparatus of claim 1, wherein the processor is configured to provide a graphic effect with respect to the pattern image based on the information included in the widget UI or the type of the widget UI.

3. The electronic apparatus of claim 2, wherein the pattern image includes a plurality of pattern elements,
wherein the graphic effect is configured to provide an effect that the plurality of pattern elements move, and
wherein the processor is configured to provide the graphic effect with a movement of the pattern element corresponding to the information included in the widget UI or the type of the widget UI.

4. The electronic apparatus of claim 2, wherein the widget UI is configured to be displayed on one area of the pattern image, and
wherein the processor is configured to provide the graphic effect only to an area other than one area on which the widget UI is displayed.

5. The electronic apparatus of claim 2, wherein the widget UI is a widget UI of an application related to playing music content, and
wherein the processor is configured to provide a graphic effect to the pattern image based on playing time of the content while the music content is being played through the application.

6. The electronic apparatus of claim 2, wherein the widget UI is a clock widget UI, and
wherein the processor is configured to determine and provide an area providing the graphic effect among the pattern images based on time information of the clock widget UI.

7. The electronic apparatus of claim 2, wherein the widget UI includes a video content, and wherein the processor is configured to analyze an image of the video content and provide a graphic effect to the pattern image.

8. The electronic apparatus of claim 2, wherein the processor is configured to provide a first graphic effect corresponding to the first widget UI to the pattern image while displaying the first widget UI,
based on a user command for changing to a second widget UI being input, change the first widget UI to the second widget UI and display it, and provide a second graphic effect corresponding to the second widget UI to the pattern image.

9. The electronic apparatus of claim 2, wherein the processor is configured to provide a change graphic effect to the pattern image while the first widget UI is changed to the second widget UI.

10. The electronic apparatus of claim 1, wherein the processor is configured to control the display unit to display a pallet UI for generating the patter image according to the user command, and
wherein the pallet UI is configured to include a plurality of pattern information and a plurality of color information.

11. A control method of an electronic apparatus comprising:
generating a pattern image and a widget UI set by a user while the electronic apparatus is operating in a standby mode; and
displaying the pattern image based on the widget UI,
wherein the displaying comprises changing the pattern image based on information included in the widget UI and the type of the widget UI and displaying it.

12. The method of claim 11, wherein the changing is configured to provide a graphic effect with respect to the pattern image based on the information included in the widget UI or the type of the widget UI.

13. The method of claim 12, wherein the pattern image includes a plurality of pattern elements,
wherein the graphic effect is configured to provide an effect that the plurality of pattern elements move, and
wherein the displaying is configured to provide the graphic effect with a movement of the pattern element corresponding to the information included in the widget UI or the type of the widget UI.

14. The method of claim 12, wherein the widget UI is displayed on one area of the pattern image, and
wherein the displaying is configured to provide the graphic effect only to an area other than one area where the widget UI is displayed.

15. The method of claim 12, wherein the widget UI is a widget UI of an application related to playing music content, and
wherein the displaying is configured to provide the graphic effect on the pattern image based on playing time of the content while the music content is being played through the application.
